(19) Europäisches Patentamt
European Patent Office
Office européen des brevets

(11) EP 3 853 280 B1

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **19765478.3**

(22) Anmeldetag: **09.09.2019**

(51) Internationale Patentklassifikation (IPC):
***C08G 59/50*** *(2006.01)* ***C08G 59/56*** *(2006.01)*

(52) Gemeinsame Patentklassifikation (CPC):
**C08G 59/4014; C08G 59/5033; C08G 59/56**

(86) Internationale Anmeldenummer:
**PCT/EP2019/073939**

(87) Internationale Veröffentlichungsnummer:
**WO 2020/058016 (26.03.2020 Gazette 2020/13)**

(54) **HÄRTERZUSAMMENSETZUNG FÜR EINE EPOXIDHARZMASSE, EPOXIDHARZMASSE UND MEHRKOMPONENTEN-EPOXIDHARZSYSTEM**

CURING AGENT COMPOSITION FOR AN EPOXY RESIN COMPOSITION, EPOXY RESIN COMPOSITION AND MULTI-COMPONENT EPOXY RESIN SYSTEM

COMPOSITION DURCISSANTE POUR UNE MASSE DE RÉSINE ÉPOXY, MASSE DE RÉSINE ÉPOXY ET SYSTÈME DE RÉSINE ÉPOXY MULTICOMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018 EP 18195417**

(43) Veröffentlichungstag der Anmeldung:
**28.07.2021 Patentblatt 2021/30**

(73) Patentinhaber: **Hilti Aktiengesellschaft**
**9494 Schaan (LI)**

(72) Erfinder: **BEHRENS, Nicole**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 2 826 798**
**WO-A1-2013/063236**
**US-A1- 2011 315 916**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Härterzusammensetzung für eine Epoxidharzmasse zur chemischen Befestigung von Konstruktionselementen, eine Epoxidharzmasse und ein Mehrkomponenten-Epoxidharzsystem. Die Erfindung betrifft ferner ein Verfahren zur chemischen Befestigung von Konstruktionselementen in Bohrlöchern. Die Erfindung betrifft auch die Verwendung eines Salzes (S) als Beschleuniger in einer Epoxidharzmasse zur chemischen Befestigung, wobei die Epoxidharzmasse ein Benzoxazin-Amin-Addukt und ein gegenüber Epoxidgruppen reaktives Amin umfasst.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Die Anwendung von bekannten Mörtelmassen in Ländern mit hohen Temperaturen, wie beispielsweise die Vereinigten Arabischen Emirate, ist jedoch stark limitiert, da bereits ab einer Temperatur von 35 °C die Belastbarkeit (Versagenslasten) der Mörtelmassen abnehmen. Des Weiteren wirken sich hohe Temperaturen negativ auf die Handhabbarkeit und die Verarbeitungsdauer der Mörtelmassen auf den Baustellen aus.

Bei herkömmlichen Mörtelmassen ist zur Erzielung einer guten Handhabbarkeit ein hoher Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Aushärtezeit entgegensteht.

Mörtelmassen auf Epoxid-Amin-Basis weisen generell eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen. Das Einstellen der Aushärtezeit von Mörtelmassen auf Epoxid-Amin-Basis erfolgt in der Regel durch die Auswahl eines entsprechenden Amins und/oder durch Zugabe von Katalysatoren wie beispielsweise tertiären Aminen, Alkoholen und Säuren.

Es ist aus dem Stand der Technik bekannt, eine Kombination aus Benzoxazin-Amin Addukten mit Aminen in Härterkomponenten für Mehrkomponenten-Epoxidharzmassen einzusetzen. So beschreibt die EP 014 99 89 A2 eine wässrige Dispersion aus Benzoxazin und protoniertem Amin. Die Dispersionen können getrocknet und gehärtet werden, um Oberflächenbeschichtungen und Grundierungen herzustellen. Die Mischung aus Benzoxazin und Amin wird bei 135°C gehärtet.

Die WO 2013/063236 A1 beschreibt ein Mehrkomponentensystem insbesondere für Beschichtungen, welches aus Benzoxazin, Amin und Epoxid besteht und das bei erhöhten Temperaturen von ca. 100°C aushärtet. Als mögliche Zwischenprodukte werden Benzoxazin-Amin-Epoxid- und Benzoxazin-Amin-Addukte postuliert.

Die WO 2013/048851 A1 beschreibt Oligo- und Polymere aus der Reaktion von Benzoxazin und einer Mischung aus Amin und Thiol. Es wird eine aushärtbare Zusammensetzung aus Benzoxazin, Thiol und Amin offenbart, wobei die Härtungstemperatur bei mindestens 100°C liegt.

Die EP2826798 A1 beschreibt die Verwendung eines Hybridhärters als Härter in Mehrkomponenten-Mörtelmassen auf Epoxid-Amin-Basis für Bauzwecke.

Der Nachteil der aus dem Stand der Technik bekannten Epoxidsysteme, in denen Benzoxazin-Amin-Addukte zum Einsatz kommen, ist deren langsame Aushärtungszeit. Dieser Umstand macht diese Systeme zur chemischen Befestigung, insbesondere zur Verankerung von Befestigungsmitteln in Bohrlöchern als chemischer Dübel, ungeeignet. Eine Erhöhung der Temperatur auf über 80 °C ist bei Anwendungen, gerade im Außenbereich unpraktikabel. Insbesondere die aus dem Stand der Technik bekannten Gemische, die aus einer Benzoxazin-, Amin- und einer Epoxidkomponente bestehen, sind daher für den Einsatz auf Baustellen zu langsam in ihrer Aushärtung und daher ungeeignet.

Die noch nicht offengelegte Patentanmeldung mit der Anmeldenummer 17207545.9 beschreibt eine Härterzusammensetzung umfassend ein Benzoxazin-Amin-Addukt und ein Amin, wobei das Benzoxazin-Amin-Addukt in der Härterzusammensetzung in einem Anteil von wenigstens 8,5 Gew.-% enthalten ist. Aufgrund der in Benzoxazin-Amin-Addukten inherenten OH- und tert.-Amin-Funktionalitäten, die die Reaktion von Epoxid mit Aminen beschleunigt, kann beim Einsatz von Benzoxazin-Amin-Addukten in der Regel auf poly- oder oligomere Beschleuniger (wie z. B. Novolake) verzichtet werden, um Probleme, wie beispielsweise hinsichtlich der Viskosität, zu vermeiden. Nichtsdestotrotz haben gerade Epoxidharzmassen, in denen Benzoxazin-Amin-Addukte als Härter verwendet werden, in der Regel lange Aushärtezeiten von ca. 10 bis 12 Stunden. Dies kommt insbesondere zum Tragen, wenn die Härterzusammensetzung einen hohen Anteil an einem Benzoxazin-Amin-Addukt aufweist.

Da lange Aushärtezeiten von chemischen Ankern aber die Arbeiten auf der Baustelle verzögern, ist es von Vorteil mit Epoxid-Amin-Systemen zu arbeiten, die bereits z. B. bereits nach sechs Stunden eine ausreichende Festigkeit aufweisen.

Aufgabe der Erfindung ist es daher, eine Epoxidharzmasse bereitzustellen, die wenigstens ein Benzoxazin-Amin-Addukt enthält und die für Befestigungszwecke geeignet ist. Im Vergleich zu herkömmlichen Mörtelmassen soll eine verkürzte Aushärtedauer bei vergleichbar hoher Auszugsfestigkeit erreicht werden. Es ist insbesondere Aufgabe

der vorliegenden Erfindung eine Epoxidharzmasse bereitzustellen, die im Vergleich zu herkömmlichen Mörtelmassen eine verkürzte Aushärtedauer aufweist und eine verbesserte Auszugsfestigkeit bei erhöhten Temperaturen, wie beispielsweise in einem Temperaturbereich von 35 °C bis 50 °C aufweist. Des Weiteren ist es wünschenswert, dass die Epoxidharzmasse im Vergleich zu herkömmlichen Mörtelmassen eine verbesserte Auszugsfestigkeit in wassergefüllten Bohrlöchern zeigt.

Die der Erfindung zu Grunde liegende Aufgabe wird durch eine Härterzusammensetzung gemäß Anspruch 1 gelöst. Bevorzugte Ausführungsformen der erfindungsgemäßen Härterzusammensetzung sind in den Unteransprüchen angegeben, die wahlweise miteinander kombiniert werden können.

Gegenstand der Erfindung ist ferner eine Epoxidharzmasse gemäß Anspruch 10 und ein Mehrkomponenten-Epoxidharzsystem nach Anspruch 12. Bevorzugte Ausführungsformen der erfindungsgemäßen Epoxidharzmasse und des Mehrkomponenten-Epoxidharzsystems sind in den Unteransprüchen angegeben, die wahlweise miteinander kombiniert werden können.

Gegenstand der Erfindung ist ferner ein Verfahren zur chemischen Befestigung von Konstruktionselementen in Bohrlöchern gemäß Anspruch 14.

Die Erfindung umfasst ferner die Verwendung mindestens eines Salzes (S) als Beschleuniger in einer Epoxidharzmasse gemäß Anspruch 15.

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen;

*"cycloaliphatische Verbindungen"* sind Verbindungen mit einer carbocyclischen Ringstruktur, ausgenommen Benzolderivate oder andere aromatische Systeme;

*"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

*"aromatische Verbindungen"* sind Verbindungen, die der Hückel (4n+2)-Regel folgen;

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)): und

*"Salze"* sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck *"Salze der Salpetersäure"* beschreibt Verbindungen, die von Salpetersäure ($HNO_3$) abgeleitet werden und als Anion ein Nitrat ($NO_3^-$) umfassen. Der Ausdruck *"Salze der Salpetrige Säure"* beschreibt Verbindungen, die von der Salpetrigen Säure ($HNO_2$) abgeleitet werden und als Anion ein Nitrit ($NO_2^-$) umfassen. Der Ausdruck *"Salze der Halogene"* beschreibt Verbindungen, die als Anion ein Element der 7. Hauptgruppe des Periodensystems umfassen. Insbesondere sind unter dem Ausdruck der *"Salze der Halogene"* solche Verbindungen zu verstehen, die die als Anion ein Fluorid ($F^-$), Chlorid ($Cl^-$), ein Bromid (Br) oder Iodid ($I^-$) umfassen. Der Ausdruck *"Salze der Trifluormethansulfonsäure"* beschreibt Verbindungen, die von der Trifluormethansulfonsäure ($CF_3SO_3H$) abgeleitet werden und als Anion ein Triflat ($CF_3SO_3^-$) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

Die Härterzusammensetzung (B) umfasst erfindungsgemäß ein Benzoxazin-Amin-Addukt, wobei das Benzoxazin-Amin-Addukt ausgewählt ist aus der Gruppe bestehend aus Substanzen gemäß Formel **Ia**, Substanzen gemäß Formel **Ib** und Mischungen daraus, mit den folgenden Strukturen:

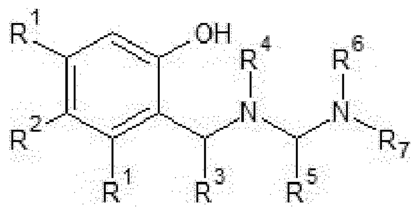

**Ia,**

und

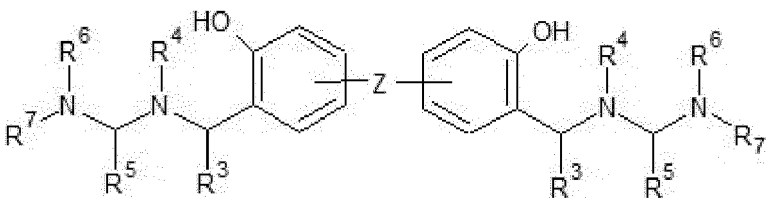

**Ib,**

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen von zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die aus der Gruppe bestehend aus aliphatischen, alicyclischen, aromatischen Aminresten und außerdem Kombinationen aus zwei oder mehreren dieser Reste ausgewählt sind, wobei die Reste jeweils unsubstituiert oder wahlweise substituiert sein können;

wobei Z ausgewählt ist aus einer direkten Bindung, -C(O)-, -S-, -O-, -S(O)-, $-S(O)_2-$ , $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$ , $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 10 sind, bevorzugt gleich 0 bis 5, und wobei $R^8$, $R^9$, $R^{10}$ und $R^{11}$ jeweils unabhängig die gleiche Bedeutung wie die Reste $R^1$ bis $R^5$ besitzen.

Des Weiteren umfasst die Härterzusammensetzung (B) ein gegenüber Epoxidgruppen reaktives Amin, welches aus der Gruppe bestehend aus aliphatischen, alicyclischen, aromatischen und araliphatischen Aminen ausgewählt ist, und welches pro Molekül im Mittel mindestens zwei an ein Stickstoffatom gebundene reaktive Wasserstoffatome aufweist.

Erfindungsgemäß wird als Beschleuniger wenigstens ein Salz (S) aus der Gruppe bestehend aus Salzen der Salpetersäure, Salzen der Salpetrigen Säure, Salzen der Halogene, Salzen der Trifluormethansulfonsäure sowie Kombinationen davon verwendet. Das Salz (S) ist vorzugsweise in einem Anteil von 0,1 bis 15 Gew.-% bezogen auf das Gesamtgewicht der Härterzusammensetzung in der Härterzusammensetzung enthalten.

Im Stand der Technik werden Benzoxazin-Amin-Addukte beschrieben, die in Lösung im Gleichgewicht mit der jeweiligen Benzoxazin- und Aminkomponente vorliegen. Diese Mischungen können durch Erhitzen polymerisiert werden. Wird einer Mischung aus Benzoxazin und Amin noch eine Epoxidkomponente zugegeben, so entsteht eine Vielzahl verschiedener Addukte aus diesen drei Komponenten, die ebenfalls bei Erhitzung polymerisieren.

Die Erfindung ermöglicht den Einsatz von Benzoxazin-Amin-Addukt-enthaltenden Epoxidharzmassen als sogenannte "chemische Dübel" bei erhöhten Temperaturen auf einer Baustelle. Damit wird ein chemischer Dübel erhalten, der vorteilhafte Lasteigenschaften auch nach kurzer Aushärtezeit bei erhöhten Temperaturen aufweist.

Die Verwendung der erfindungsgemäßen Härterzusammensetzung in einer Epoxidharzmasse für Befestigungszwecke führt zu einer erheblichen Beschleunigung der Aushärtereaktion. Die gehärteten Massen zeigen eine hervorragende Auszugsfestigkeit bei erhöhten Temperaturen und können bereits nach kurzer Zeit, innerhalb von etwa 4 bis 6 Stunden, und teilweise sogar noch früher, belastet werden. Somit eignen sich die erfindungsgemäße Härterzusammensetzung sowie die daraus hergestellte Epoxidharzmassen insbesondere für die Anwendung in Ländern mit hohen Temperaturen. Ferner zeigen die gehärteten Massen eine hervorragende Auszugsfestigkeit im wassergefüllten

Bohrloch.

Für die Benzoxazin-Amin-Addukte gemäß den Strukturen Ia und Ib ist es bevorzugt, dass $R^3$ und $R^5$ jeweils H sind.

Weiterhin bevorzugt ist Z ausgewählt ist aus einer direkten Bindung, $-C(R^8)(R^9)-$, - $C(R^8)(aryl)-$, -C(O)-, -S-, -O-, -S(O)-, $-S(O)_2-$, einem divalenten Heterozyklus und - $[C(R^8)(R^9)]_m$-Arylen-$[C(R^{10})(R^{11})]_n$-, wobei m und n jeweils unabhängig voneinander gleich 0 bis 5 sind. Besonders bevorzugt ist Z ausgewählt aus einer direkten Bindung oder $-C(R^8)(R^9)-$, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

In einer vorteilhaften Ausführungsform sind $R^3$ und $R^5$ im Benzoxazin-Amin-Addukt gemäß den Strukturen Ia und Ib jeweils H, und Z hat die vorstehend angegebene Bedeutung.

In einer bevorzugten Ausführungsform ist das Benzoxazin-Amin-Addukt in einem Anteil von 9 Gew.-% bis 65 Gew.-% in der Härterzusammensetzung (B) vorhanden, bevorzugt von 9,5 Gew.-% bis 55 Gew.-%, weiter bevorzugt von 10 Gew.-% bis 45 Gew.-% und besonders bevorzugt von 10 Gew.-% bis 35 Gew.-%.

Das Benzoxazin-Amin-Addukt wird durch die Umsetzung wenigstens einer Benzoxazinkomponente mit wenigstens einer Aminkomponente, bevorzugt einem aromatischen oder araliphatischen Amin, einer Diamin- und/oder Polyaminkomponente, erhalten. Geeignete Benzoxazine für die Herstellung des Benzoxazin-Amin-Addukts haben, ohne den Umfang der Erfindung einzuschränken, bevorzugt die folgende Struktur:

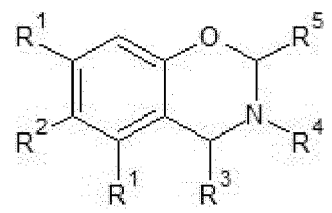

**IIa,**

oder

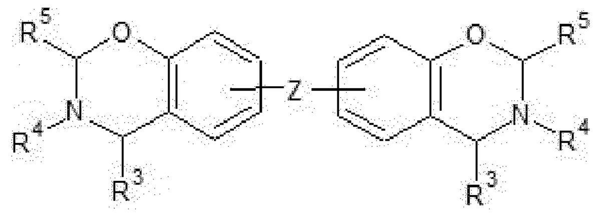

**IIb,**

worin $R^1$ bis $R^5$ und Z die oben angegebenen Bedeutungen besitzen.

In vorteilhaften Ausführungsformen des Benzoxazin-Amin-Addukts bedeuten $R^3$ und $R^5$ jeweils H, und Z ist ausgewählt ist aus einer direkten Bindung, $-C(R^8)(R^9)-$, $-C(R^8)(aryl)-$, -C(O)-, -S-, -O-, -S(O)-, $-S(O)_2-$, einem divalenten Heterozyklus und $-[C(R^8)(R^9)]_m$-Arylen-$[C(R^{10})(R^{11})]_n$-, wobei m und n jeweils unabhängig voneinander gleich 0 bis 5 sind. Besonders bevorzugt ist Z ausgewählt aus einer direkten Bindung oder $-C(R^8)(R^9)-$, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

Bevorzugt werden die Benzoxazine ausgewählt aus den folgenden Strukturen:

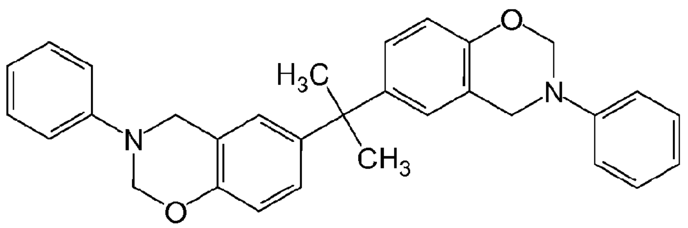

IIc,

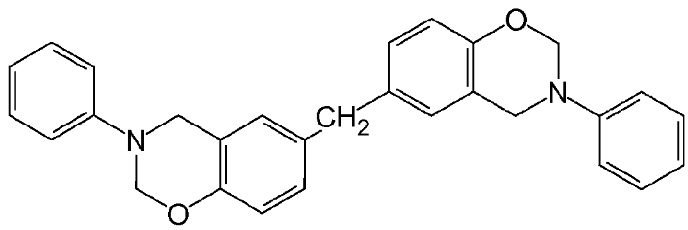

IId,

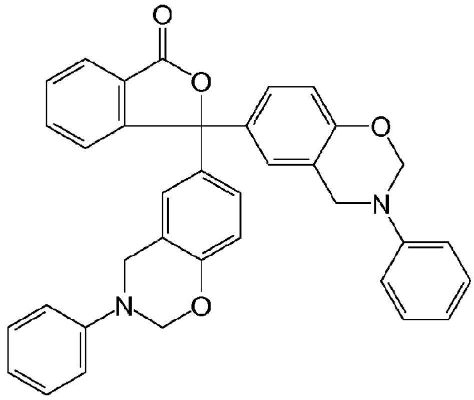

IIe,

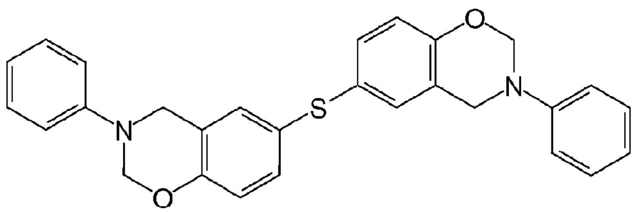

IIf

und

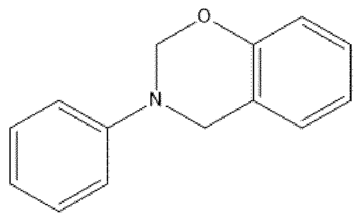

IIg.

Geeignete Amine für die Herstellung des Benzoxazin-Amin-Addukts und/oder zur Verwendung als gegenüber Epoxidgruppen reaktives Amin in der Härterzusammensetzung (B) sind, ohne den Umfang der Erfindung einzuschränken, bevorzugt ausgewählt aus der Gruppe der unverzweigten oder verzweigten $C_2$-$C_{10}$-Alkyldiamine, der $C_2$-$C_{10}$-Polyalkylen-Polyamine und der aromatischen und araliphatischen Amine, welche bevorzugt einen substituierten oder unsubstituierten Benzolring enthalten.

Das Amin kann entweder alleine oder als Gemisch aus zwei oder mehr der genannten Amine eingesetzt werden. Als vorteilhaft hat sich ein Amingemisch erwiesen, das aus zwei oder mehr Aminen zusammengesetzt ist.

Die Alkyldiamine sind bevorzugt ausgewählt aus 2,2,4- oder 2,4,4-Trimethyl-1,6-diaminohexan und Gemischen davon (TMD), 3-Aminomethyl-3,5,5-trimethylcyclohexan (IPDA), 1,3-Bis(aminomethyl)-cyclohexan (1,3-BAC), 1,4-Bis(aminomethyl)-cyclohexan (1,4 -BAC), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin) und 1,6-Hexamethylendiamin.

Die Polyalkylen-Polyamine sind bevorzugt ausgewählt aus Diethylentriamin (DETA), Triethylentetramin (TETA), Tetraethylenpentamin (TEPA) und Pentaethylenhexamin (PEHA).

Die aromatischen Amine sind bevorzugt unter Diethylmethylbenzoldiamin und 4,4'-Sulfonyldianiline und die

araliphatischen Polyamine sind bevorzugt unter 1,3-Benzoldimethanamin (mXDA) und 1,4-Benzoldimethanamin (pXDA) und N,N'-Dimethyl-1,3-benzoldimethanamin ausgewählt.

Besonders bevorzugte Amine sind 3-Aminomethyl-3,5,5-trimethylcyclohexan (IPDA), 2-Methyl-1,5-pentandiamin (DYTEK A), m-Xylylendiamin (mXDA) und 1,3-Bis(aminomethyl)-cyclohexan (1,3-BAC) und Mischungen daraus.

Weiter geeignet sind beispielsweise die folgenden Amine: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 1,3-Diaminopentan, 1,2-Bis(aminomethyl)cyclohexan, 1,2- und 1,4-Diaminocyclohexan (1,2-DACH und 1,4-DACH), Methylcyclohexyldiamin (mCDA), Bis(4-amino-3-methylcyclohexyl)methan, 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diaminodicyclohexylmethan (PACM), gemischte polycyclische Amine (MPCA) (z.B. Ancamine 2168), Dimethyldiaminodicyclohexylmethan (Laromin C260), N-Ethylaminopiperazin (N-EAP), 1,14-Diamino-4,11-dioxatetradecan, Dipropylentriamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis(amino-methyl)tricyclopentadien, 1,8-Diamino-p-menthan, Bis-(4-amino-3,5-dimethylcyclohexyl)methan, Dipentylamin, N-2-(Aminoethyl)piperazin (N-AEP), N-3-(Aminopropyl)piperazin und Piperazin.

Als Benzoxazin- und Aminkomponente zur Herstellung eines Benzoxazin-Amin-Addukts kommen alle oben genannten Substanzen oder Mischungen daraus in Betracht. Dem Fachmann sind verschiedene Herstellungsverfahren des Benzoxazin-Amin-Addukts bekannt.

Zur Herstellung des Benzoxazin-Amin-Addukts wird vorzugsweise eine der oben genannten Benzoxazinkomponenten in einem Lösungsmittel gelöst bei und bei erhöhter Temperatur mit der Aminkomponente umgesetzt. Vorzugsweise wird das Amin im Überschuss zugegeben. Anstelle des Lösungsmittels kann das Benzoxazin auch in einem Überschuss an Aminkomponente gelöst werden.

Die Reaktionsdauer beträgt vorzugsweise 30 h oder weniger, bevorzugt 26 h oder weniger und besonders bevorzugt höchstens etwa 24 h.

Die Reaktionstemperatur beträgt vorzugsweise mindestens 50 °C und weniger als 80 °C, bevorzugt weniger als 75 °C, weiter bevorzugt weniger als 70°C, noch weiter bevorzugt weniger als 65°C und besonders bevorzugt weniger als 60°C. Das erhaltene Benzoxazin-Amin-Addukt wird isoliert oder als Lösung in der Aminkomponente erhalten.

Gemäß einem weiteren Verfahren kann die Benzoxazinkomponente in der Aminkomponente gelöst. Sie kann mit weiteren Substanzen gemischt werden, insbesondere mit Substanzen, die zusätzlich in einer Härterzusammensetzung(B) eingesetzt werden. Die Mischung wird für mindestens 5 Tage, bevorzugt mindestens 6 Tage, bevorzugter mindestens eine Woche bei Raumtemperatur (21 °C) gelagert, um eine Mischung mit einem Anteil an Benzoxazin-Amin-Addukt von wenigstens 8,5 Gew.- % zu erhalten. Wird die Mischung nicht ausreichend lang gelagert, so ist keine ausreichend hohe Benzoxazin-Amin-Addukt-Konzentration vorhanden.

Die Härterzusammensetzung (B) umfasst ferner mindestens ein gegenüber Epoxidgruppen reaktives Amin. Das gegenüber Epoxidgruppen reaktive Amin ist ein Diamin oder Polyamin, das aus der Gruppe bestehend aus aliphatischen, alicyclischen, aromatischen und araliphatischen Aminen ausgewählt ist, und weist pro Molekül im Mittel mindestens zwei an ein Stickstoffatom gebundene reaktive Wasserstoffatome auf. Das Amin kann aus allen oben genannten Aminen und den für Epoxid-Amin-Systeme üblichen und dem Fachmann bekannten Aminen ausgewählt werden.

Beispiele geeigneter Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA) 2-Methylpentandiamin (DYTEK A), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1$0^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte Amine in der erfindungsgemäßen Härterzusammensetzung sind Polyamine, wie 2-Methylpentandiamin (DYTEK A), 3-aminomethyl-3,5,5-trimethylcyclohexan (IPDA), 1,3-Benzoldimethanamin (m-Xylylendiamin, mXDA), 1,4-Benzoldimethanamin (p-Xylylendiamin, PXDA), 1,6-Diamino-2, 2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), (3(4),8(9)Bis(aminomethyl)dicyclo[5. 2.1.0$^{2,6}$]decan (Isomerengemisch, tricyclischer primärer Amine; TCD-Diamin), 1,14-Diamino-4, 11-dioxatetradecan, Dipropylentriamin, 2-Methyl-1, 5-pentandiamin, N, N'-Dicyclohexyl-1, 6-hexandiamin, N, N'-Dimethyl-1, 3-diaminopropan, N, N'-Diethyl-1, 3-diaminopropan, N, N-Dimethyl-1, 3-diaminopropan, sekundäre Polyoxypropylendi- und triamine, 2,5-Diamino-2, 5-dimethylhexan, Bis(amino-methyl)tricyclopentadien, 1,8-Diamino-p-menthan, Bis-(4-amino-3, 5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin und Methylcyclohexyl-diamin (mCDA).

Das gegenüber Epoxidgruppen reaktive Amin und das zur Herstellung des Benzoxazin-Amin-Addukts verwendete Amin können gleich oder verschieden sein. Bevorzugt werden die gleichen Amine sowohl für das gegenüber Epoxidgruppen reaktive Amin als auch zur Herstellung des Benzoxazin-Amin-Addukts verwendet.

Als Ersatz für die Amine und/oder als weiterer Zusatz für die Härterzusammensetzung (B) können auch Thiole, Dithiole und/oder Polythiole verwendet werden, die bevorzugt aus der Gruppe bestehend aus aliphatischen, alicyclischen, aromatischen und araliphatischen Thiolen sowie Mischungen daraus ausgewählt sind.

Erfindungsgemäß enthält die Härterzusammensetzung als Beschleuniger mindestens ein Salz (S). Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon.

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder $NaNO_3$. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calcium-

nitrit), NaCl (Natriumchlorid), NaBr (Natriumbromid), NaI (Natriumiodid), $Ca(CF_3SO_3)_2$ (Calciumtriflat), $Mg(CF_3SO_3)_2$ (Magnesiumtriflat), $Li(CF_3SO_3)_2$ (Lithiumtriflat).

Die erfindungsgemäße Härterzusammensetzung kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Härterzusammensetzung kann es vorgesehen sein, dass das Salz (S) in einem geeignete Lösemittel gelöst wird und entsprechend als Lösung eingesetzt wird. Hierfür eignen sich beispielsweise organische Lösemittel wie Methanol, Ethanol und Glycerin. Als Lösemittel kann aber auch Wasser verwendet werden, gegebenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur bis zur vollständigen Lösung.

Das Salz (S) ist vorzugsweise in einem Anteil von 0,1 bis 15 Gew.-% bezogen auf das Gesamtgewicht der Härterzusammensetzung in der Härterzusammensetzung enthalten. Vorzugsweise ist das Salz (S) in einem Anteil von 0,5 bis 12 Gew.-%, bevorzugter in einem Anteil 1,0 bis 10, noch bevorzugter in einem Anteil von 1,5 bis 8,0 Gew.-% bezogen auf das Gesamtgewicht der Härterzusammensetzung in der Härterzusammensetzung enthalten.

In einer weiteren vorteilhaften Ausführungsform umfasst die Härterzusammensetzung (B) wenigstens einen weiteren Zusatz ausgewählt aus der Gruppe von Beschleunigern, Haftvermittlern, Verdickern und Füllstoffen.

Nicht reaktive Verdünnungsmittel (Lösungsmittel) können vorzugsweise in einer Menge bis zu 30 Gew.-% enthalten sein, bezogen auf die das Gesamtgewicht der Härterzusammensetzung, beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei $\leq$ 5 Gew.-% bezogen auf das Gesamtgewicht der Härterzusammensetzung.

Die Beschleuniger sind in der Härterzusammensetzung (B) in einem Gewichtsanteil von 0,001 bis 20 Gew.-%, bevorzugt 0,001 bis 5 Gew.-%, enthalten, bezogen auf das Gesamtgewicht der Härterzusammensetzung (B). Beispiele für geeignete Beschleuniger sind insbesondere Tris-2,4,6-dimethylaminomethylphenol, 2,4,6-Tris(dimethylamino)phenol und Bis[(dimethylamino)methyl]phenol. Ein geeignetes Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, der Inhalt hiermit in die vorliegende Anmeldung mit aufgenommen wird.

Der Haftvermittler kann in einer Menge bis zu 10 Gew.-%, bevorzugt 0,1 Gew.-% bis 5 Gew.-%, weiter bevorzugt 1,0 bis 2,5 Gew.-% bezogen auf das Gesamtgewicht der Härterzusammensetzung enthalten sein.

Als Verdicker dienen bevorzugt Kieselsäuren. Ein Verdicker kann in einer Menge bis zu 10 Gew.-%, bevorzugt 0,1 Gew.-% bis 5 Gew.-%, bezogen auf das Gesamtgewicht der Härterzusammensetzung (B), enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweils käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 $\mu$m) oder Qualitäten wie DAW oder DAM mit den Typenbezeichnungen 45 ($d_{50}$ < 0,44 $\mu$m), 07 ($d_{50}$ > 8,4$\mu$m), 05 ($d_{50}$ < 5,5 $\mu$m), 03 ($d_{50}$ < 4,1 $\mu$m). Weiterhin können die oberflächenbehandelte Fein- und Feinstfüllstoffe vom Typ Aktisil AM (aminosilanbehandelt, $d_{50}$ = 2,2 $\mu$m) und Aktisil EM (epoxysilanbehandelt, d50=2,2 $\mu$m) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten des später beschriebenen Mehrkomponenten-Epoxidharzsystems vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

In einer vorteilhaften Ausführungsform weist die Härterzusammensetzung (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ. Der AHEW-Wert wird aus dem Molekulargewicht (Mw) des Amins geteilt durch die Anzahl reaktiver Wasserstoffatome pro Molekül ermittelt (H-Äq. = Mw/Funktionalität).

Experimentell kann der AHEW-Wert durch Bestimmung der Glasübergangstemperatur (Tg) einer Mischung aus Epoxidharz (mit bekanntem EEW) und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("Tg2") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler Tg2: 1 g Amin mit 4,65 g Epoxidharz

$$\text{AHEW (Amin)} = \frac{158}{4{,}65} = 34$$

Gegenstand der vorliegenden Erfindung ist ferner Epoxidharzmasse, die mindestens ein härtbares Epoxidharz und eine Härterzusammensetzung wie zuvor beschrieben umfasst. Bevorzugt handelt es sich bei der Epoxidharzmasse um eine Mehrkomponenten-Epoxidharzmasse, bevorzugt um eine Zweikomponenten-Epoxidharzmasse.

Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet. Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Beispiele für die zur Herstellung der Epoxidharze eingesetzten mehrwertigen Phenole sind Resorcin, Hydrochinon, 2,2-Bis-(4-Hydroxyphenyl)propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem Epoxyäquivalentgewicht (EEW) von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $M_n \leq 2000$ g/mol.

Ein weiterer Gegenstand der vorliegenden Erfindung ist ein Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente ein Benzoxazin-Amin-Addukt, welches ausgewählt ist aus der Gruppe bestehend aus Substanzen gemäß Formel **Ia**, Substanzen gemäß Formel **Ib** oder Mischungen daraus und ein gegenüber Epoxidgruppen reaktives Amin umfasst. Das Mehrkomponenten-Epoxidharzsystem umfasst auch ein Salz (S) ausgewählt aus Salzen der Salpetersäure, Salzen der Salpetrigen Säure, Salzen der Halogene, Salzen der Trifluormethansulfonsäure und Kombinationen davon, wobei das Salz (S) in der Epoxidharzkomponente (A) und/oder in der Härterkomponente enthalten ist. Bevorzugt ist das Mehrkomponenten-Epoxidharzsystem ein Zweikomponenten-Epoxidharzsystem.

Für das härtbare Epoxidharz, die Substanzen gemäß Formel Ia und Formel Ib und das Salz (S) gelten die vorstehenden Ausführungen.

Das als Beschleuniger eingesetzte Salz (S) kann in der Epoxidharzkomponente (A) oder in der Härterkomponente oder sowohl in der Epoxidharzkomponente (A) als auch in der Härterkomponente enthalten sein. Es is bevorzugt, dass das Salz (S) mindestens in der Härterkomponente, bevorzugt nur in der Härterkomponente, enthalten ist. In diesem Fall kommt im Mehrkomponenten-Epoxidharzsystem die zuvor beschriebene Härterzusammensetzung zum Einsatz.

Der Anteil an Epoxidharz in der Epoxidharzkomponente (A) beträgt >0 Gew.-% bis 100 Gew.-%, bevorzugt 10 Gew.-% bis 70 Gew.-% und besonders bevorzugt 30 Gew.-% bis 60 Gew.-%, bezogen auf das Gesamtgewicht der Epxodharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropan-triglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 Gew.-% bis 60 Gew.-% vor, bevorzugter von 1 Gew.-% bis 20 Gew.-%, bezogen auf das Gesamtgewicht der Epoxidharzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

In einer weiteren Ausführungsform kann die Epoxidharzkomponente (A) einen Co-Beschleuniger enthalten, soweit dieser mit den Epoxidharzen verträglich ist. Als Co-Beschleuniger können beispielsweise tertiäre Amine, Imidazole oder tertiäre Aminophenole, Organophosphine, Lewis-Basen oder -Säuren wie Phosphorsäureester, oder Gemische von zwei oder mehr davon verwendet werden. Diese Co-Beschleuniger können auch, wie vorgenannt, in der Härterzusammensetzung (B) vorliegen.

Der Anteil der Epoxidharzkomponente (A) an der Gesamtmasse des Mehrkomponenten-Epoxidharzsystems beträgt vorzugsweise 5 Gew.-% bis 90 Gew.-%, bevorzugt 20 Gew.- % bis 80 Gew.-%, bevorzugter 30 Gew.-% bis 70 Gew.-% oder noch bevorzugter 40 Gew.-% bis 60 Gew.-%.

Die Epoxidharze können ein EEW von 120 bis 2000 g/Eq aufweisen, vorzugsweise von 140 bis 400 g/Eq, insbesondere 150 bis 300 g/Eq aufweisen. Es können auch Mischungen mehrerer Epoxidharze verwendet werden.

Der Anteil der Härterzusammensetzung (B) an der Gesamtmasse des Mehrkomponenten-Epoxidharzsystems beträgt vorzugsweise 10 Gew.-% bis 95 Gew.- %, bevorzugt 15 Gew.-% bis 80 Gew.-%, bevorzugter 15 Gew.-% bis 60 Gew.-% oder besonders bevorzugt 20 Gew.-% bis 40 Gew.-%.

Des Weiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Als Füllstoffe dienen bevorzugt die oben beschriebenen anorganischen Füllstoffe. Die Füllstoffe können in einer oder in allen Komponenten der Mehrkomponenten-Mörtelmasse vorhanden sein. Der Anteil an Füllstoffen beträgt vorzugsweise 0 Gew.-% bis 90 Gew.-%, beispielsweise 10 Gew.-% bis 90 Gew.-%, bevorzugt 15 Gew.-% bis 75 Gew.-%, weiter bevorzugt 20 Gew.-% bis 50 Gew.-%, und weiter bevorzugt 25 Gew.-% bis 40 Gew.-%, bezogen auf das Gesamtgewicht der Mörtelmasse.

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Auch nicht reaktive Verdünnungsmittel (Lösungsmittel) können vorzugsweise in einer Menge bis zu 30 Gew.-% enthalten sein, bezogen auf das Gesamtgewicht der jeweiligen Komponente (Epoxidharz- und/oder Härterkomponente), beispielsweise von 1 Gew.-% bis 20 Gew.-%. Beispiele für geeignete Lösungsmittel sind Alkohole, wie Methanol oder Ethanol, Niederalkylketone wie Aceton, Diniederalkyl-niederalkanoylamide wie Dimethylacetamid, Niederalkylbenzole wie Xylole oder Toluol, Phthalsäureester oder Paraffine.

Derartige weitere Zusätze können vorzugsweise in Gewichtsanteilen von insgesamt 0 Gew.-% bis 40 % zugesetzt sein, bezogen auf das Gesamtgewicht der Epoxidharzkomponente.

Das Mehrkomponenten-Epoxidharzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterzusammensetzung(B) der Mörtelmasse reaktionsinhibierend voneinander getrennt angeordnet sind.

Zur bestimmungsgemäßen Anwendung des Mehrkomponenten-Epoxidharzsystems werden die Epoxidharzkomponente (A) und die Härterkomponente aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente wird danach mittels einer bekannten Injektionsvorrichtung in das zuvor gereinigte Bohrloch eingebracht. Anschließend wird das zu fixierende Bauteil in die Epoxidharzmasse eingesetzt und justiert. Die reaktiven Bestandteile der Härterkomponente reagieren mit den Epoxidharzen der Harzkomponente (A) unter Polyaddition, sodass die Epoxidharzmasse unter Umgebungsbedingungen innerhalb einer gewünschten Zeit, vorzugsweise innerhalb weniger Stunden, aushärtet.

Die Komponenten A und B werden bevorzugt in einem Verhältnis gemischt, das entsprechend der EEW- und AHEW-Werte eine ausgeglichene Stöchiometrie ergibt.

Die erfindungsgemäße Epoxidharzmasse bzw. das erfindungsgemäße Mehrkomponenten-Epoxidharzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen und das erfindungsgemäße Mehrkomponenten-Epoxidharzsystem zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Epoxidharzmasse oder ein erfindungsgemäßes Mehrkomponenten-Epoxidharzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse zur chemischen Befestigung von Konstruktionselementen, insbesondere zur Verankerung von Befestigungselementen in Bohrlöchern. Die Epoxidharzmasse umfasst dabei mindestens ein Benzoxazin-Amin-Addukt gemäß Formel la und/oder Formel Ib wie vorstehend beschrieben und ein gegenüber Epoxidgruppen reaktives Amin. Es ist bevorzugt, dass die Epoxidharzmasse in Form eines Mehrkomponenten-Epoxidharzsystems vorliegt, welche die zuvor beschriebenen Epoxidharzkomponente (A) und die Härterkomponente umfasst. Es ist weiterhin bevozugt, dass das Salz (S) in der Härterkomponente enthalten ist und somit eine Härterzusammensetzung (B) wie zuvor beschrieben verwendet wird.

Die Verwendung mindestens eines Salzes (S) im Sinne der vorliegenden Erfindung als Beschleuniger in einer Epoxidharzmasse, insbesondere in einem Mehrkomponenten-Epoxidharzsystem, ermöglicht es, die Aushärtezeit der Epoxidharzmasse erheblich zu verkürzen und ferner eine ausreichende Auszugsfestigkeit bereits nach vier bis sechs Stunden zu gewährleisten. Ferner weisen die gehärteten Epoxidharzmasse eine hervorragende Auszugsfestigkeit in bei erhöhten Temperaturen und im wassergefüllten Bohrloch auf.

Die vorliegende Erfindung betrifft auch die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse, insbesondere in einem Mehrkomponenten-Epoxidharzsystem. Die Epoxidharzmasse umfasst dabei mindestens ein Benzoxazin-Amin-Addukt gemäß Formel la und/oder Formel Ib wie vorstehend beschrieben und ein gegenüber Epoxidgruppen reaktives Amin. Es ist bevorzugt, dass die Epoxidharzmasse in Form eines Mehrkomponenten-Epoxidharzsystems vorliegt, welche die zuvor beschriebenen Epoxidharzkomponente (A) und Härterkomponente umfasst. Es ist weiterhin bevozugt, dass

das Salz (S) in der Härterkomponente enthalten ist und somit eine Härterzusammensetzung (B) verwendet wird. Die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, ermöglicht insbesondere eine Erhöhung der Auszugsfestigkeit der Epoxidharzmasse bei erhöhten Temperaturen, wie beispielsweise in einem Temperaturbereich von 35 °C bis 50 °C.

Ferner ermöglicht die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, eine Erhöhung der Auszugsfestigkeit der Epoxidharzmassen in wassergefüllten Bohrlöchern.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

### Epoxidharzkomponente (A)

Ausgangsmaterialien

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.

Als Haftvermittler wurde 3-Glycidyloxypropyl-trimethoxysilan erhältlich unter der Bezeichnung Dynalsylan GLYMO™ (Evonik Industries) verwendet.

Als Reaktivverdünner wurden die im Handel unter den Bezeichnungen Araldite DY-026 und AralditeTM DY-T (Huntsman) erhältlichen 1,4-Butandiol-diglycidylether und Trimethyolpropan-triglycidylether verwendet.

Die flüssigen Komponenten wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS- 720 der Firma Cabot Rheinfelden) zugegeben und die Mischung im Dissolver (PC Laborsystem, Volumen 1L) 10 min lang bei einem Unterdruck von 80 mbar bei 3500 U/min gerührt.

Die Zusammensetzung der in den Beispielen verwendeten Epoxidharzkomponente (A) ist in der nachfolgenden Tabelle 1 angegeben.

**Tabelle 1:** Zusammensetzung Epoxidharzkomponente (A)

| Stoff | Funktion | Gewichtsprozent [Gew.-%] |
|---|---|---|
| 3-Glycidyloxypropyl-trimethoxsysilan | Haftvermittler | 2,6 |
| Bisphenol A-basiertes Epoxidharz | Epoxidharz | 31,3 |
| Bisphenol F-basiertes Epoxidharz | Epoxidharz | 16,7 |
| 1,4-Butanediol-diglycidylether | Reaktivverdünner | 6,0 |
| Trimethylolpropan-triglycidylether | Reaktivverdünner | 6,0 |
| Quarz | Füllstoff | 34,7 |
| Kieselsäure | Verdicker | 2,7 |
| | | |
| **EEW [g/Eq]** | | **256** |

### Härterzusammensetzung (B)

Ausgangsmaterialien

Die zur Herstellung der Härterzusammensetzung (B) verwendeten Benzoxazine sind unter den Handelsnamen Araldite MT 35600 CH (Benzoxazin A; CAS-Nummer: 154505-70-1), Araldite MT 35700 CH (Benzoxazin F; CAS-Nummer: 214476-06-9) und Araldite MT 35710 FST (Benzoxazin FST: Mischung aus Benzoxazin F und 3-Phenyl-3,4-dihydro-2H-benzo[e][1,3]oxazin) von der Firma Huntsman Advanced Materials, Basel, Schweiz erhältlich.

Als Amine wurden 1,3-Cyclohexandimethanamin (1,3-BAC), m-Xylylendiamin (mXDA) der Firma MGC, Japan,

2-Piperazino-ethylamin (N-AEP) der Firma Sigma Aldrich Deutschland, Isophorondiamin (IPDA) der Firma Evonik Degussa, Deutschland sowie 2-Methlypentamethylendiamin (Dytek A) der Firma Invista, Niederlande, zur Herstellung der Härterzusammensetzung(B) verwendet.

Als Haftvermittler wurde 3-Aminopropyl-triethoxysilan verwendet, welches unter dem Handelsnamen Dynasylan AMEO der Firma Evonik Degussa erhältlich ist.

Als Füllstoff wurde Quarz (Millisil™ W12 der Firma Quarzwerke Frechen) sowie Calciumaluminatzement (Secar 80 der Firma Kerneos SA) und als Verdicker pyrogene Kieselsäure (Cab-O-Sil™ TS-720 der Firma Cabot Rheinfelden) verwendet.

Herstellung des Benzoxazin-Amin-Addukts

Das entsprechende Benzoxazin wurde in überschüssigen Amin gelöst, und die Lösung wurde unter Rühren 24 h lang auf 55°C (für B2: 80 °C) erwärmt. Es wurde eine gelbe bis gelbbraune dickflüssige Lösung erhalten (Benzoxazin/Amin-Addukt ca. 60% in Amin).

Es wurden die folgenden Benzoxazin-Amin-Addukte hergestellt:

B1: Benzoxazin FST/1,3-BAC, 60%ig in 1,3-BAC
B2: Benzoxazin F/IPDA, 60%ig in IPDA
B3: Benzoxazin F/mXDA, 60%ig in mXDA
B4: Benzoxazin A/N-AEP, 60%ig in N-AEP

Beschleuniger

Zur Herstellung der in der Härterzusammensetzung (B) verwendeten Salze (S) bzw. Beschleuniger wurden in der nachfolgenden Tabelle 2 angegebenen Bestandteile verwendet.

**Tabelle 2:** Liste der verwendeten Salze (S) bzw. Beschleuniger

| **Salz (S) bzw. Beschleuniger** | **Handelsname** | **Hersteller** |
|---|---|---|
| Calciumnitrat | Calciumnitrat-Tetrahydrat | Sigma-Aldrich |
| Calciumcarbonat | Calciumcarbonat | Sigma-Aldrich |
| Salpetersäure 70%ig | Salpetersäure | Sigma-Aldrich |
| Natriumiodid | Natriumiodid | Sigma-Aldrich |
| Calciumtriflat | Calciumtrifluoromethansulfonat | Sigma-Aldrich |
| 2,4,6-Tris(dimethylaminomethyl)phenol, Bis[(dimethylamino) methyl]phenol | Ancamin K54 | Evonik |

Die Salze Calciumnitrat und Natriumiodid wurden als Lösungen in Glycerin (1,2,3-Propantriol, CAS-Nr. 56-81-5, Merck, D) eingesetzt. Zur Herstellung der Calciumnitrat-Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat. Zur Herstellung der Natriumiodid-Lösung wurden 36,4g Natriumiodid zu 63,6 g Glycerin gegeben und bei 50 °C bis zur vollständigen Lösung gerührt. Die so hergestellte Lösung enthielt 36,4 % Natriumiodid.

Calciumtriflat wurde als Feststoff im Amin des jeweiligen Härters gelöst.

Weiterhin wurde ein Calciumnitrat/Salpetersäure-Lösung als Beschleuniger eingesetzt. Zur Herstellung dieser Lösung wurden 52,6 g Calciumcarbonat langsam zu 135,2 g Salpetersäure gegeben und anschließend 5 min gerührt.

Beispiele 1 bis 7

Zur Herstellung der Härterzusammensetzung (B) der nachfolgenden Beispiele 1 bis 7 wurde das jeweilige Benzoxazin-Amin-Addukt als Lösung im jeweiligen Amin eingesetzt und gemäß den nachstehenden Tabellen mit dem jeweiligen weiteren Amin verdünnt. Der Beschleuniger wurde hinzugegeben und anschließend wurden Quarzmehl und Kieselsäure zugegeben und im Dissolver (PC Laborsystem, Volumen 1L) unter Vakuum bei 3500 U/min für 10 min gerührt.

Die Zusammensetzung der so hergestellten Härterzusammensetzungen (B) ist in den nachfolgenden Tabelle 3 angegeben:

Tabelle 3: Zusammensetzung der Härterzusammensetzung (B) in Gew.-%

| | Beispiel | 1 | 2 | 3 | 4 | 5 | 6 | 7 |
|---|---|---|---|---|---|---|---|---|
| Benzoxazin-Amin-Addukt | B1 | 27,3 | - | - | - | - | - | - |
| | B2 | - | 26,6 | - | - | - | - | - |
| | B3 | - | - | 28,9 | - | - | - | - |
| | B4 | - | - | - | 52,3 | 28,5 | 26,25 | 28,9 |
| Amin | IPDA | 27,3 | 26,6 | - | - | - | - | - |
| | 1,3-BAC | - | - | 28,9 | - | - | - | - |
| | N-AEP | - | - | - | 4,75 | - | - | - |
| | DYTEK A | - | - | - | - | 28,5 | 26,25 | 28,9 |
| Salz (S) | Calciumnitrat | 6,25 | 7,6 | - | 3,75 | 3,75 | - | - |
| | Calciumnitrat/ Salpetersäure | - | - | 3,0 | - | - | - | - |
| | Natriumiodid | - | - | - | - | - | 8,3 | - |
| | Calciumtriflat | - | - | - | - | - | - | 3,0 |
| | Haftvermittler | 2,4 | 2,4 | 2,4 | 2,4 | 2,4 | 2,4 | 2,4 |
| | Quarz | 19,4 | 19,5 | 19,5 | 19,5 | 19,55 | 19,5 | 19,5 |
| | Calciumaluminatzement | 13,0 | 13,0 | 13,0 | 13,0 | 13,0 | 13,0 | 13,0 |
| | Verdicker | 4,3 | 4,3 | 4,3 | 4,3 | 4,3 | 4,3 | 4,3 |
| | **AHEW [g/Eq]** | **87** | **103** | **73** | **127** | **73** | **80** | **72** |

Vergleichsbeispiele 1 bis 5

Zur Herstellung der Härterzusammensetzung (B) der nachfolgenden Vergleichsbeispiele 1 bis 5 wurde das jeweilige Benzoxazin-Amin-Addukt als Lösung im jeweiligen Amin eingesetzt und gemäß den nachstehenden Tabellen mit dem jeweiligen weiteren Amin verdünnt. Der Beschleuniger wurde hinzugegeben und anschließend wurden Quarzmehl und Kieselsäure zugegeben und im Dissolver (PC Laborsystem, Volumen 1L) bei einem Unterdruck von 80 mbar bei 3500 U/min für 10 min gerührt.

In Tabelle 4 ist die Zusammensetzung der Härterkomponenten (B) der Vergleichsbeispiele 1 bis 5 gezeigt.

**Tabelle 4:** Zusammensetzung der Härterzusammensetzung (B) in Gew.-%

| | Vergleichsbeispiel | 1 | 2 | 3 | 4 | 5 |
|---|---|---|---|---|---|---|
| Benzoxazin-Amin-Addukt | B1 | 29,2 | - | - | - | - |
| | B2 | - | 29,2 | - | - | - |
| | B3 | - | - | 29,2 | - | - |
| | B4 | - | - | - | 53,5 | 29,2 |
| Amin | IPDA | 29,2 | 29,2 | - | - | - |
| | 1,3-BAC | - | - | 29,2 | - | - |
| | N-AEP | - | - | - | 4,9 | - |
| | DYTEK A | - | - | - | - | 29,2 |
| Beschleuniger | Ancamin K54 | 2,4 | 2,4 | 2,4 | 2,4 | 2,4 |
| | Haftvermittler | 2,4 | 2,4 | 2,4 | 2,4 | 2,4 |
| | Quarz | 19,5 | 19,5 | 19,5 | 19,5 | 19,5 |
| | Calciumaluminatzement | 13,0 | 13,0 | 13,0 | 13,0 | 13,0 |
| | Verdicker | 4,3 | 4,3 | 4,3 | 4,3 | 4,3 |
| | **AHEW [g/Eq]** | **81** | **93** | **72** | **124** | **72** |

**Mörtelmassen und Auszugsversuche**

Die Epoxidharzkomponente (A) und die Härterzusammensetzung (B) wurden in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterzusammensetzung(B) gemäß den oben angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden mit Druckluft (2 × 6 bar), einer Drahtbürste (2 x) und anschließend wieder Druckluft (2 × 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt.

Die Aushärtezeit bei Versuch 1 betrug 4 h bei 21 °C. Bei Versuch 2 betrug die Aushärtezeit 6 Stunden bei 21 °C. Bei Versuch 3 betrug die Aushärtezeit 24 Stunden bei 21 °C.

Die Versagenslast wurde durch zentrisches Ausziehen der Ankergewindestange mit enger Abstützung ermittelt. Die mit den Mörtelmassen unter Verwendung einer Härterzusammensetzung(B) gemäß den Beispielen 1 bis 7 und den Vergleichsbeispielen 1 bis 5 erhaltenen Lastwerte sind der folgenden Tabelle 5 zu entnehmen.

**Tabelle 5:** Bestimmung der Lastwerte

| | | Beispiele | | | | | | | Vergleichsbeispiele | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Auszugsversuche | Versuch Nummer | Lastwert [N/mm$^2$] | | | | | | | | | | | |
| Aushärtung 4h | 1 | 12,7 | 4,6 | 25,5 | 19,3 | 25,0 | 21,8 | 26,7 | 0,1 | 0,0 | 1,1 | 16,3 | 2,5 |
| Aushärtung 6h | 2 | 15,1 | 13,1 | 33,0 | 24,8 | 30,0 | 27,8 | 30,7 | 5,2 | 0,3 | 23,9 | 25,5 | 23,4 |
| Aushärtung 24h | 3 | 31,6 | 33,2 | 35,9 | 28,9 | 36,2 | 34,3 | 34,1 | 31,6 | 29,5 | 36,0 | 27,8 | 33,2 |

Die Auszugsversuche zeigen, dass die Mörtelmassen der erfindungsgemäßen Beispiele schon nach einer Aushärtezeit von 4 Stunden jeweils signifikant höhere Lastwerte aufweisen als die Mörtelmassen der Vergleichsbeispiele. Die Mörtelmassen der Vergleichsbeispielen 1, 2, 4 und 5 waren nach einer Aushärtezeit von 4 Stunden noch weich. Die Auszugsversuche nach 6 Stunden zeigen das weitere Fortschreiten der Aushärtung der Mörtelmassen, wobei die erfindungsgemäßen Beispiele nach 6 Stunden Aushärtezeit jeweils signifikant höhere Lastwerte aufweisen als die Mörtelmassen der Vergleichsbeispiele.

## Patentansprüche

1. Härterzusammensetzung (B) umfassend ein Benzoxazin-Amin-Addukt, welches ausgewählt ist aus der Gruppe bestehend aus Substanzen gemäß Formel **Ia**, Substanzen gemäß Formel **Ib** oder Mischungen daraus, mit den folgenden Strukturen:

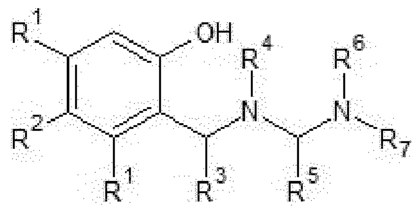

Ia,

und

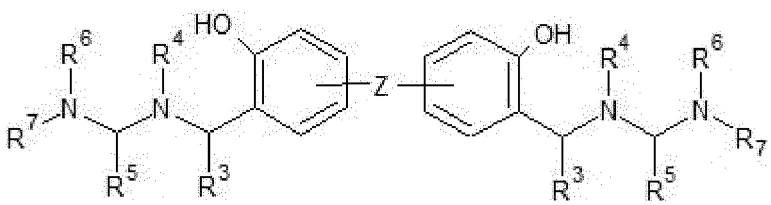

Ib,

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonlyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen aus zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die ausgewählt sind aus der Gruppe bestehend aus aliphatischen, alicyclischen, aromatischen oder araliphatischen Aminresten und außerdem Kombinationen aus zwei oder mehreren dieser Reste, wobei die Reste jeweils unsubstituiert oder wahlweise substituiert sein können;
wobei Z ausgewählt ist aus einer direkten Bindung, -C(O)-, -S-, -O-, -S(O)-, $-S(O)_2-$ , $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, einem divalenten Heterozyklus und $-[C(R^8)(R^9)]_m-Arylen-[C(R^{10})(R^{11})]_n-$, wobei m und n jeweils unabhängig voneinander gleich 0 bis 10 sind, bevorzugt gleich 0 bis 5, wobei $R^8$, $R^9$, $R^{10}$ und $R^{11}$ jeweils unabhängig die gleiche Bedeutung wie die Reste $R^1$ bis $R^5$ besitzen; und
ein gegenüber Epoxidgruppen reaktives Amin, das aus der Gruppe bestehend aus aliphatischen, alicyclischen, aromatischen und araliphatischen Aminen ausgewählt ist, und das pro Molekül im Mittel mindestens zwei an ein Stickstoffatom gebundene reaktive Wasserstoffatome aufweist, **dadurch gekennzeichnet, dass** die Härterzusammensetzung mindestens ein Salz (S) ausgewählt aus der Gruppe bestehend aus Salzen der Salpetersäure, Salzen der Salpetrigen Säure, Salzen der Halogene, Salzen der Trifluormethansulfonsäure und Kombinationen davon umfasst.

**2.** Härterzusammensetzung nach Anspruch 1, wobei $R^3$ und $R^5$ jeweils H bedeuten.

**3.** Härterzusammensetzung nach Anspruch 1 oder 2, wobei Z ausgewählt ist aus einer direkten Bindung, $-C(R^8)(R^9)-$, $-C(R^8)(aryl)-$, -C(O)-, -S-, -O-, -S(O)-, $-S(O)_2-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 5 sind.

**4.** Härterzusammensetzung nach einem der Ansprüche 1 bis 3, wobei $R^3$ und $R^5$ jeweils H bedeuten und wobei Z ausgewählt ist aus einer direkten Bindung und $-C(R^8)(R^9)-$, wobei $R^8$ und $R^9$ jeweils unabhängig ausgewählt sind aus H oder $C_1$-$C_4$-Alkylresten, bevorzugt aus H und Methyl, oder zusammen einen Laktonrest bilden.

**5.** Härterzusammensetzung nach einem der vorangehenden Ansprüche, wobei das Benzoxazin-Amin-Addukt erhältlich ist durch Umsetzen eines Benzoxazins mit einem Amin aus der Gruppe der aliphatischen und/oder araliphatischen Amine, Diamine und/oder Polyamine, wobei das Benzoxazin folgenden Strukturen aufweist:

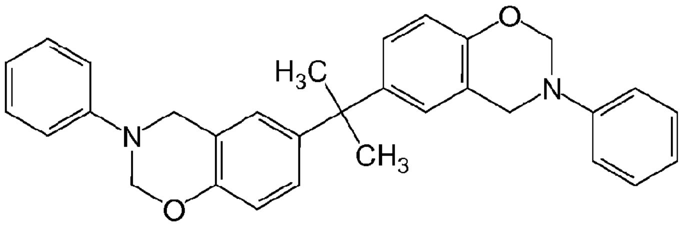

IIc,

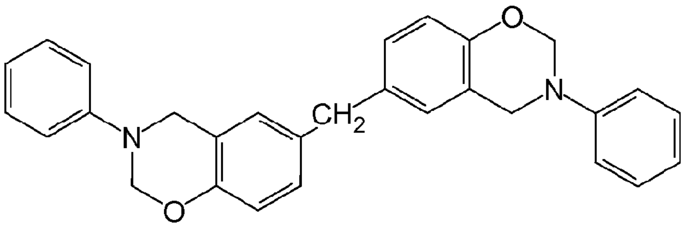

IId,

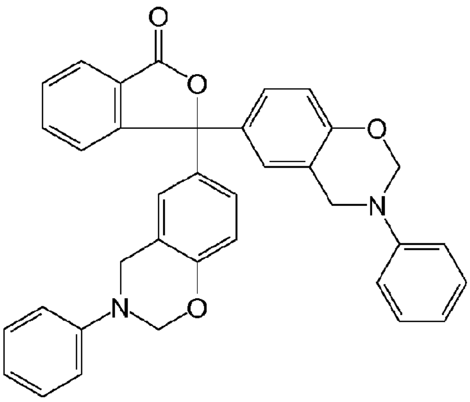

IIe,

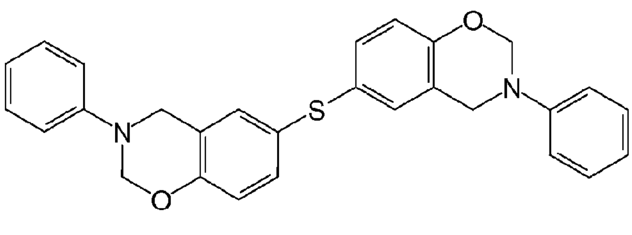

IIf

oder

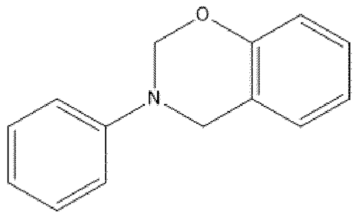

IIg.

6. Härterzusammensetzung nach einem der vorhergehenden Ansprüche, **dadurch gekennzeichnet, dass** das gegenüber Epoxidgruppen reaktive Amin ausgewählt ist aus 2,2,4- oder 2,4,4-Trimethyl-1,6-diaminohexan und Gemischen davon, 3-Aminomethyl-3,5,5-trimethylcyclohexan (IPDA), 1,3-Bis(aminomethyl)-cyclohexan (1,3-BAC), 1,4-Bis(aminomethyl)-cyclohexan (1,4-BAC), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin), 1,6-Hexamethylendiamin, Diethylentriamin (DETA), Triethylentetramin (TETA), Tetraethylenpentamin (TEPA), Pentaethylenhexamin (PEHA), 1,3-Benzoldimethanamin (mXDA), 1,4-Benzoldimethanamin (pXDA) und N,N'-Dimethyl-1,3-benzoldimethanamin, und Mischungen von zwei oder mehreren daraus.

7. Härterzusammensetzung nach Anspruch 6, **dadurch gekennzeichnet, dass** das gegenüber Epoxidgruppen reaktive Amin ausgewählt ist aus 3-Aminomethyl-3,5,5-trimethylcyclohexan (IPDA), 2-Methyl-1,5-pentandiamin (DYTEK A), 1,3-Benzoldimethanamin (mXDA) und 1,3-Bis(aminomethyl)-cyclohexan (1,3-BAC) sowie Mischungen daraus.

8. Härterzusammensetzung nach einem der vorhergehenden Ansprüche, **dadurch gekennzeichnet, dass** das Salz (S) ausgewählt ist aus der Gruppe bestehend aus Nitrat ($NO_3^-$), Iodid ($I^-$), Triflat ($CF_3SO_3^-$) sowie Mischungen daraus.

9. Härterzusammensetzung nach einem der vorhergehenden Ansprüche, **dadurch gekennzeichnet, dass** das Salz (S) in einem Anteil von 0,1 bis 15 Gew.-% bezogen auf das Gesamtgewicht der Härterzusammensetzung in der Härterzusammensetzung enthalten ist.

10. Epoxidharzmasse enthaltend mindestens ein härtbares Epoxidharz und eine Härterzusammensetzung nach einem der vorhergehenden Ansprüche.

11. Epoxidharzmasse nach Anspruch 10, **dadurch gekennzeichnet, dass** die Epoxidharzmasse eine Mehrkomponenten-Epoxidharzmasse ist.

12. Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente ein Benzoxazin-Amin-Addukt und ein gegenüber Epoxidgruppen reaktives Amin umfasst, wobei das Benzoxazin-Amin-Addukt ausgewählt ist aus der Gruppe bestehend aus Substanzen gemäß Formel **Ia**, Substanzen gemäß Formel **Ib** oder Mischungen daraus, mit den folgenden Strukturen:

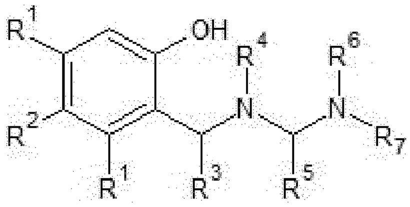

Ia,

und

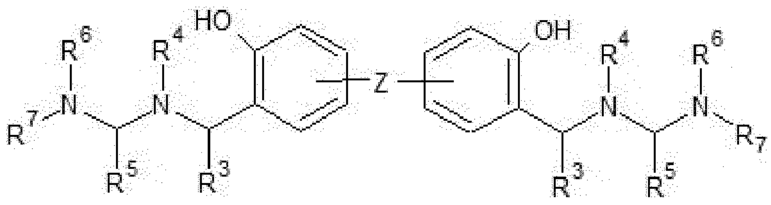

Ib,

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonlyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen aus zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die ausgewählt sind aus der Gruppe bestehend aus aliphatischen, alicyclischen, aromatischen oder araliphatischen Aminresten und außerdem Kombinationen aus zwei oder mehreren dieser Reste, wobei die Reste jeweils unsubstituiert oder wahlweise substituiert sein können;
wobei Z ausgewählt ist aus einer direkten Bindung, -C(O)-, -S-, -O-, -S(O)- , $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$ , $-[C(R^8)(R^9)]_m-S(O)_2-[C(R^{10})(R^{11})]_n-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 10 sind, bevorzugt gleich 0 bis 5, wobei $R^8$, $R^9$, $R^{10}$ und $R^{11}$ jeweils unabhängig die gleiche Bedeutung wie die Reste $R^1$ bis $R^5$ besitzen; und wobei das gegenüber Epoxidgruppen reaktive Amin aus der Gruppe bestehend aus aliphatischen, alicyclischen, aromatischen und araliphatischen Aminen ausgewählt ist, und das pro Molekül im Mittel mindestens zwei an ein Stickstoffatom gebundene reaktive Wasserstoffatome aufweist, **dadurch gekennzeichnet, dass** ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist.

**13.** Mehrkomponenten-Epoxidharzsystem nach Anspruch 12, **dadurch gekennzeichnet, dass** das Salz (S) in der Härterkomponente enthalten ist.

**14.** Verfahren zur chemischen Befestigung von Konstruktionselementen in Bohrlöchern, wobei zur chemischen Befestigung eine Epoxidharzmasse nach Anspruch 10 oder 11 oder ein Mehrkomponenten-Epoxidharzsystem nach Anspruch 12 oder 13 verwendet wird.

**15.** Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse zur chemischen Befestigung, wobei die Epoxidharzmasse ein Benzoxazin-Amin-Addukt und ein gegenüber Epoxidgruppen reaktives Amin umfasst, wobei das Benzoxazin-Amin-Addukt ausgewählt ist aus der Gruppe bestehend aus Substanzen gemäß Formel **Ia**, Substanzen gemäß Formel **Ib** oder Mischungen daraus, mit den folgenden Strukturen:

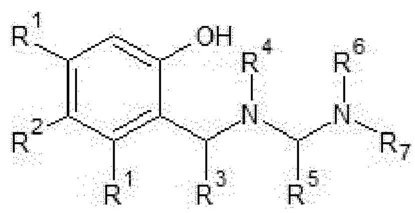

Ia,

und

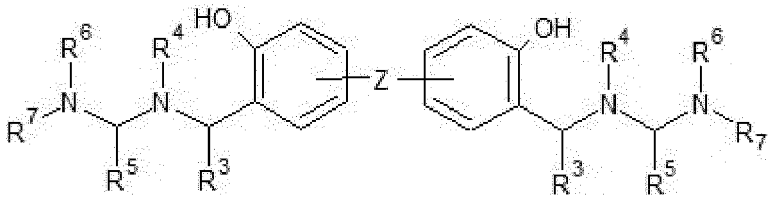

Ib,

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonlyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen aus zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die ausgewählt sind aus der Gruppe bestehend aus aliphatischen, alicyclischen, aromatischen oder araliphatischen Aminresten und außerdem Kombinationen aus zwei oder mehreren dieser Reste, wobei die Reste jeweils unsubstituiert oder wahlweise substituiert sein können;
wobei Z ausgewählt ist aus einer direkten Bindung, -C(O)-, -S-, -O-, -S(O)- , $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)_m-O-[C(R^{10})(R^{11})]_n-$, $-[C(R^8)(R^9)]_m-S(O)-[C(R^{10})(R^{11})]_n-$ , $-[C(R^8)(R^9)]_m-S(O)_2-[C(R^{10})(R^{11})]_n-$, einem divalenten Heterozyklus und $-[C(R^8)(R^9)]_m-Arylen-[C(R^{10})(R^{11})]_n-$, wobei m und n jeweils unabhängig voneinander gleich 0 bis 10 sind, bevorzugt gleich 0 bis 5, wobei $R^8$, $R^9$, $R^{10}$ und $R^{11}$ jeweils unabhängig die gleiche Bedeutung wie die Reste $R^1$ bis $R^5$ besitzen, und wobei das gegenüber Epoxidgruppen reaktive Amin aus der Gruppe bestehend aus aliphatischen, alicyclischen, aromatischen und araliphatischen Aminen ausgewählt ist, und das pro Molekül im Mittel mindestens zwei an ein Stickstoffatom gebundene reaktive Wasserstoffatome aufweist.

## Claims

**1.** Hardener composition (B), comprising a benzoxazine-amine adduct which is selected from the group consisting of substances according to formula **Ia,** substances according to formula **Ib** or mixtures thereof, having the following structures:

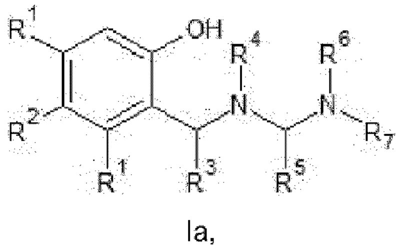

Ia,

and

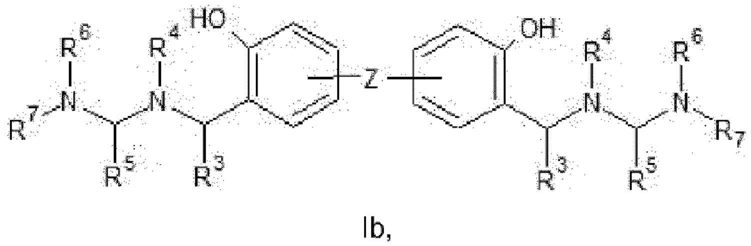

Ib,

where $R^1$, $R^2$, $R^3$, $R^4$ and $R^5$ are each independently selected from H, alkyl, cycloalkyl, heterocycloalkyl, aryl, heteroaryl, arylalkyl, heteroalkyl, alkoxy, hydroxyl, hydroxyalkyl, carboxyl, halo, haloalkyl, amino, aminoalkyl, alkylcarbonyloxy, arylcarbonyloxy, alkoxycarbonyl, alkylcarbonyl, alkylsulfonylamino, aminosulfonyl, sulfonic acid or alkylsulfonyl groups, and also from combinations of two or more of these groups, it being possible for the groups to each be unsubstituted or optionally substituted;

where $R^6$ and $R^7$ each independently represent H or an amino, diamino or polyamino group selected from the group consisting of aliphatic, alicyclic, aromatic or araliphatic amine groups and also combinations of two or more of these groups, it being possible for the groups to each be unsubstituted or optionally substituted;
where Z is selected from a direct bond, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)_2-[C(R^{10})(R^{11})]_n-$, a divalent heterocycle and $-[C(R^8)(R^9)]_m$-arylene-$[C(R^{10})(R^{11})]_n-$, where m and n are each, independently of one another, between 0 and 10, preferably between 0 and 5, and where $R^8$, $R^9$, $R^{10}$ and $R^{11}$ each independently have the same meaning as groups $R^1$ to $R^5$; and
an amine which is reactive to epoxy groups and is selected from the group consisting of aliphatic, alicyclic, aromatic and araliphatic amines, and which has on average per molecule at least two reactive hydrogen atoms bonded to a nitrogen atom, **characterized in that** the curing agent composition contains at least one salt (S) selected from the group consisting of salts of nitric acid, salts of nitrous acid, salts of halogens, salts of trifluoromethanesulfonic acid, and combinations thereof.

2. Hardener composition according to claim 1, wherein $R^3$ and $R^5$ each represent H.

3. Hardener composition according to either claim 1 or claim 2, wherein Z is selected from a direct bond, $-C(R^8)(R^9)-$, $-C(R^8)(aryl)-$, -C(O)-, -S-, -O-, -S(O)-, $-S(O)_2-$, a divalent heterocycle and $-[C(R^8)(R^9)]_m$-arylene-$[C(R^{10})(R^{11})]_n-$, where m and n are each, independently of one another, between 0 and 5.

4. Hardener composition according to any of claims 1 to 3, wherein $R^3$ and $R^5$ each represent H and wherein Z is selected from a direct bond and $-C(R^8)(R^9)-$, where $R^8$ and $R^9$ are each independently selected from H or $C_1$-$C_4$ alkyl groups, preferably from H and methyl, or together form a lactone group.

5. Hardener composition according to any of the preceding claims, wherein the benzoxazine-amine adduct can be obtained by reacting a benzoxazine with an amine from the group of aliphatic and/or araliphatic amines, diamines and/or polyamines, wherein the benzoxazine has the following structures:

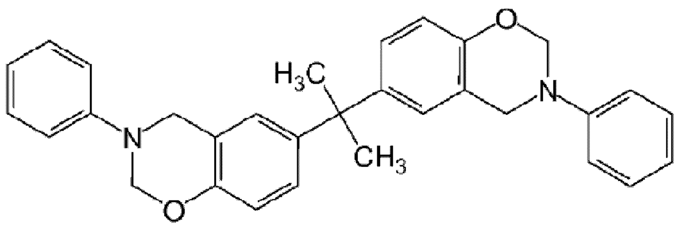

IIc,

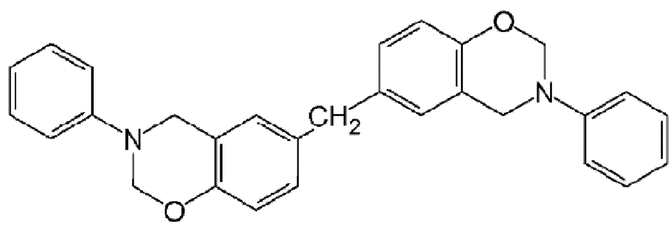

IId,

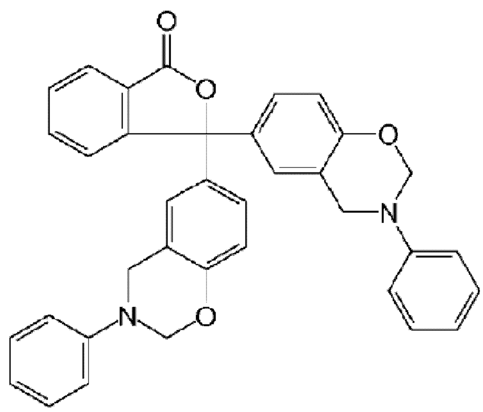

IIe,

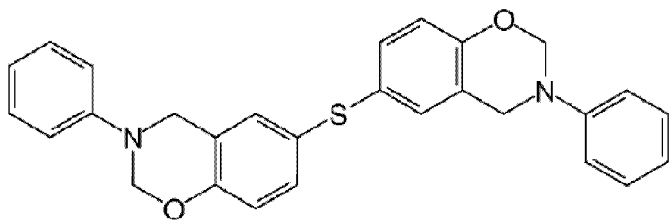

IIf

or

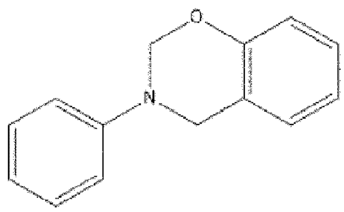

IIg.

6. Hardener composition according to any of the preceding claims, **characterized in that** the amine which is reactive to epoxy groups is selected from 2,2,4- or 2,4,4-trimethyl-1,6-diaminohexane and mixtures thereof, 3-aminomethyl-3,5,5-trimethylcyclohexane (IPDA), 1,3-bis(aminomethyl)cyclohexane (1,3-BAC), 1,4-bis(aminomethyl)cyclohexane (1,4-BAC), 2-methyl-1,5-pentanediamine (DYTEK A), (3(4),8(9)bis(aminomethyl)dicyclo[5.2.1.02,6]decane and isomer mixtures thereof (TCD-diamine), aminomethyltricyclo[5.2.1.02,6]decane and isomer mixtures thereof (TCD-amine), 1,6-hexamethylenediamine, diethylenetriamine (DETA), triethylenetetramine (TETA), tetraethylenepentamine (TEPA), pentaethylenehexamine (PEHA), 1,3-benzenedimethanamine (mXDA), 1,4-benzenedimethanamine (pXDA) and N,N'-dimethyl-1,3-benzenedimethanamine, and mixtures of two or more thereof.

7. Hardener composition according to claim 6, **characterized in that** the amine which is reactive to epoxy groups is selected from 3-aminomethyl-3,5,5-trimethylcyclohexane (IPDA), 2-methyl-1,5-pentanediamine (DYTEK A), 1,3-benzenedimethaneamine (mXDA) and 1,3-bis(aminomethyl)cyclohexane (1,3-BAC) and mixtures thereof.

8. Hardener composition according to any of the preceding claims, **characterized in that** the salt (S) is selected from the group consisting of nitrate ($NO_3^-$), iodide ($I^-$), triflate ($CF_3SO_3^-$), and combinations thereof.

9. Hardener composition according to any of the preceding claims, **characterized in that** the salt (S) is contained in the hardener composition in a proportion of from 0.1 to 15 wt.%, based on the total weight of the hardener composition.

10. Epoxy resin composition containing at least one curable epoxy resin and a hardener composition according to any of the preceding claims.

11. Epoxy resin composition according to claim 10, **characterized in that** the epoxy resin composition is a multi-component epoxy resin composition.

**12.** Multi-component epoxy resin system comprising an epoxy resin component (A) and a hardener component, the epoxy resin component (A) containing a curable epoxy resin, and the hardener component comprising a benzoxazine-amine adduct and an amine which is reactive to epoxy groups, the benzoxazine-amine adduct being selected from the group consisting of substances according to formula **Ia,** substances according to formula **Ib** or mixtures thereof, having the following structures:

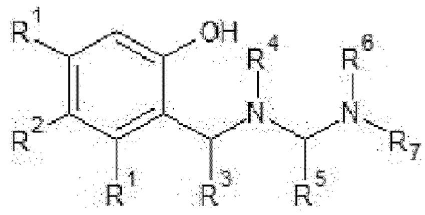

Ia,

and

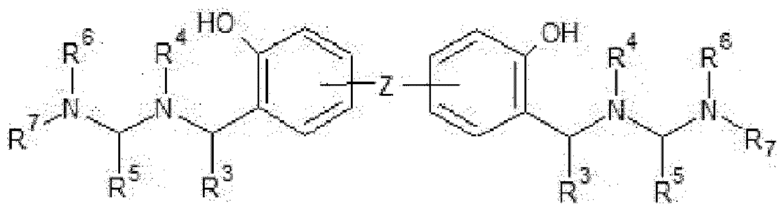

Ib,

where $R^1$, $R^2$, $R^3$, $R^4$ and $R^5$ are each independently selected from H, alkyl, cycloalkyl, heterocycloalkyl, aryl, heteroaryl, arylalkyl, heteroalkyl, alkoxy, hydroxyl, hydroxyalkyl, carboxyl, halo, haloalkyl, amino, aminoalkyl, alkylcarbonyloxy, arylcarbonyloxy, alkoxycarbonyl, alkylcarbonyl, alkylsulfonylamino, aminosulfonyl, sulfonic acid or alkylsulfonyl groups, and also from combinations of two or more of these groups, it being possible for the groups to each be unsubstituted or optionally substituted;

where $R^6$ and $R^7$ each independently represent H or an amino, diamino or polyamino group selected from the group consisting of aliphatic, alicyclic, aromatic or araliphatic amine groups and also combinations of two or more of these groups, it being possible for the groups to each be unsubstituted or optionally substituted;
where Z is selected from a direct bond, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)_2-[C(R^{10})(R^{11})]_n-$, a divalent heterocycle and $-[C(R^8)(R^9)]_m$-arylene-$[C(R^{10})(R^{11})]_n-$, where m and n are each, independently of one another, between 0 and 10, preferably between 0 and 5, and where $R^8$, $R^9$, $R^{10}$ and $R^{11}$ each independently have the same meaning as groups $R^1$ to $R^5$; the amine which is reactive to epoxy groups being selected from the group consisting of aliphatic, alicyclic, aromatic and araliphatic amines and having on average per molecule at least two reactive hydrogen atoms bonded to a nitrogen atom, **characterized in that** a salt (S) selected from salts of nitric acid, salts of nitrous acid, salts of halogens, salts of halogens, salts of trifluoromethanesulfonic acid and combinations thereof is contained in the epoxy resin component (A) and/or in the hardener component.

**13.** Multi-component epoxy resin system according to claim 12, **characterized in that** the salt (S) is contained in the hardener component.

**14.** Method for the chemical fastening of construction elements in boreholes, wherein an epoxy resin composition according to either claim 10 or claim 11 or a multi-component epoxy resin system according to either claim 12 or claim 13 is used for the chemical fastening.

**15.** Use of at least one salt (S) selected from the group consisting of salts of nitric acid, salts of nitrous acid, salts of

halogens, salts of trifluoromethanesulfonic acid and combinations thereof as an accelerator in an epoxy resin composition for chemical fastening, wherein the epoxy resin composition comprises a benzoxazine-amine adduct and an amine which is reactive to epoxy groups, wherein the benzoxazine-amine adduct is selected from the group consisting of substances according to formula **Ia,** substances according to formula **Ib** or mixtures thereof, having the following structures:

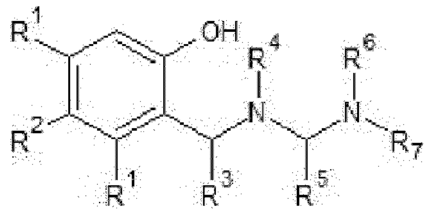

Ia,

and

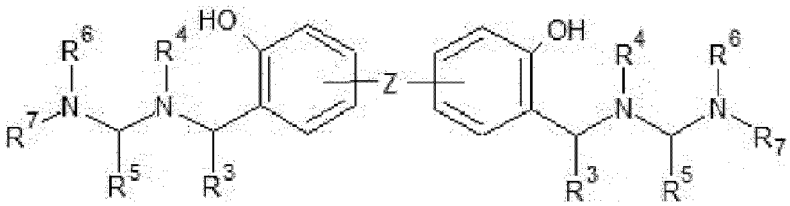

Ib,

where $R^1$, $R^2$, $R^3$, $R^4$ and $R^5$ are each independently selected from H, alkyl, cycloalkyl, heterocycloalkyl, aryl, heteroaryl, arylalkyl, heteroalkyl, alkoxy, hydroxyl, hydroxyalkyl, carboxyl, halo, haloalkyl, amino, aminoalkyl, alkylcarbonyloxy, arylcarbonyloxy, alkoxycarbonyl, alkylcarbonyl, alkylsulfonylamino, aminosulfonyl, sulfonic acid or alkylsulfonyl groups, and also from combinations of two or more of these groups, wherein the groups can each be unsubstituted or optionally substituted;

where $R^6$ and $R^7$ each independently represent H or an amino, diamino or polyamino group selected from the group consisting of aliphatic, alicyclic, aromatic or araliphatic amine groups and also combinations of two or more of these groups, wherein the groups can each be unsubstituted or optionally substituted;

where Z is selected from a direct bond, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, a divalent heterocycle and $-[C(R^8)(R^9)]_m$-arylene-$[C(R^{10})(R^{11})]_n-$, where m and n are each, independently of one another, between 0 and 10, preferably between 0 and 5, and where $R^8$, $R^9$, $R^{10}$ and $R^{11}$ each independently have the same meaning as groups $R^1$ to $R^5$, and wherein the amine which is reactive to epoxy groups is selected from the group consisting of aliphatic, alicyclic, aromatic and araliphatic amines and has on average per molecule at least two reactive hydrogen atoms bonded to a nitrogen atom.

## Revendications

1. Composition de durcisseur (B) comprenant un produit d'addition benzoxazine-amine qui est choisi dans le groupe constitué par des substances selon la formule la, des substances selon **la** formule **Ib** ou leurs mélanges, comportant les structures suivantes :

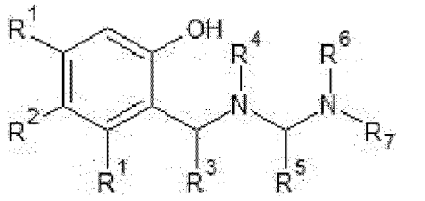

Ia,

et

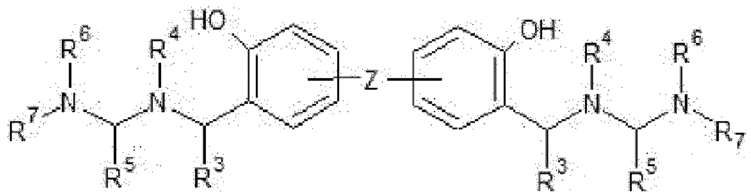

Ib,

$R^1$, $R^2$, $R^3$, $R^4$ et $R^5$ étant respectivement indépendamment choisis parmi H, un radical alkyle, cycloalkyle, hétérocycloalkyle, aryle, hétéroaryle, arylalkyle, hétéroalkyle, alcoxy, hydroxyle, hydroxyalkyle, carboxyle, halo, haloalkyle, amino, aminoalkyle, alkylcarbonyloxy, arylcarbonyloxy, alcoxycarbonyle, alkylcarbonyle, alkylsulfonylamino, aminosulfonyle, acide sulfonique ou alkylsulfonyle, et également parmi des combinaisons de deux ou plus desdits radicaux, les radicaux pouvant être respectivement non substitués ou éventuellement substitués ;

$R^6$ et $R^7$ représentant respectivement indépendamment H ou un radical amino, diamino ou polyamino et étant choisis dans le groupe constitué par des radicaux amine aliphatiques, alicycliques, aromatiques ou araliphatiques, et également parmi des combinaisons de deux ou plus desdits radicaux, les radicaux pouvant être respectivement non substitués ou éventuellement substitués ;

Z étant choisi parmi une liaison directe, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(\text{aryle})-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, un hétérocycle divalent et $-[C(R^8)(R^9)]_m-\text{arylène}-[C(R^{10})(R^{11})]_n-$, m et n représentant respectivement indépendamment l'un de l'autre 0 à 10, de préférence 0 à 5, $R^8$, $R^9$, $R^{10}$ et $R^{11}$ possédant respectivement indépendamment la même représentation que les radicaux $R^1$ à $R^5$ ; et

une amine réactive vis-à-vis des groupes époxy et qui est choisie dans le groupe constitué par les amines aliphatiques, alicycliques, aromatiques et araliphatiques, et présente en moyenne au moins deux atomes d'hydrogène réactifs liés à un atome d'azote par molécule, **caractérisée en ce que** la composition de durcisseur comprend au moins un sel (S) choisi dans le groupe constitué par les sels d'acide nitrique, les sels d'acide nitreux, les sels d'halogènes, les sels d'acide trifluorométhanesulfonique et leurs combinaisons.

**2.** Composition de durcisseur selon la revendication 1, $R^3$ et $R^5$ représentant respectivement H.

**3.** Composition de durcisseur selon la revendication 1 ou 2, Z étant choisi parmi une liaison directe, $-C(R^8)(R^9)-$, $-C(R^8)(\text{aryle})-$, -C(O)-, -S-, -O-, -S(O)-, $-S(O)_2-$, un hétérocycle divalent et $-[C(R^8)(R^9)]_m-\text{arylène}-[C(R^{10})(R^{11})]_n-$, m et n représentant respectivement indépendamment l'un de l'autre 0 à 5.

**4.** Composition de durcisseur selon l'une des revendications 1 à 3, $R^3$ et $R^5$ représentant respectivement H et Z étant choisi parmi une liaison directe et $-C(R^8)(R^9)-$, $R^8$ et $R^9$ étant choisis respectivement indépendamment parmi H ou des radicaux alkyle en $C_1$-$C_4$, de préférence parmi H et méthyle, ou formant ensemble un radical lactone.

**5.** Composition de durcisseur selon l'une des revendications précédentes, le produit d'addition benzoxazine-amine pouvant être obtenu en faisant réagir une benzoxazine avec une amine du groupe des amines, diamines et/ou polyamines aliphatiques et/ou araliphatiques, la benzoxazine présentant les structures suivantes :

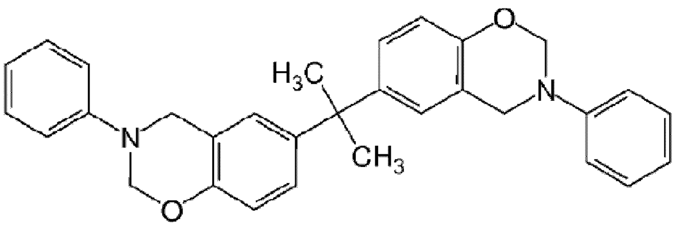

IIc,

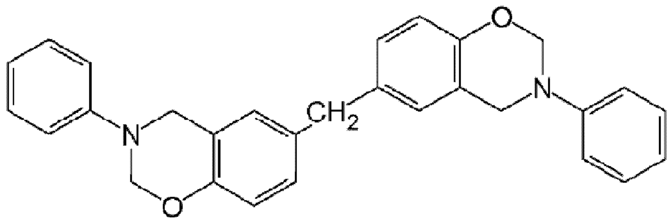

IId,

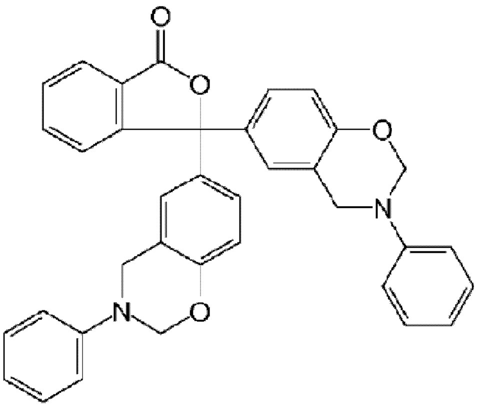

IIe,

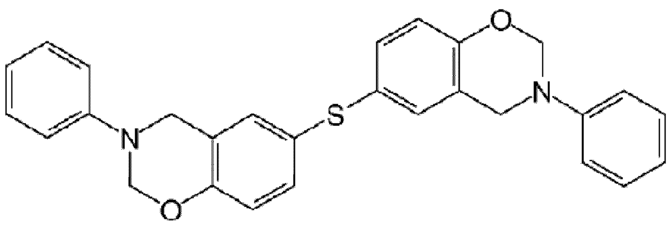

IIf

ou

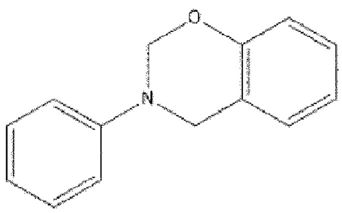

IIg.

**6.** Composition de durcisseur selon l'une des revendications précédentes, **caractérisée en ce que** l'amine réactive vis-à-vis des groupes époxy est choisie parmi le 2,2,4-triméthyl-1,6-diaminohexane ou le 2,4,4-triméthyl-1,6-diaminohexane et leurs mélanges, le 3-aminométhyl-3,5,5-triméthylcyclohexane (IPDA), le 1,3-bis(aminométhyl)cyclohexane (1,3-BAC), le 1,4-bis(aminométhyl)-cyclohexane (1,4-BAC), le 2-méthyl-1,5-pentanediamine (DYTEK A), le (3(4),8(9)bis(aminométhyl)dicyclo[5.2.1.02,6]décane et ses mélanges isomères (TCD-diamine), l'aminométhyltricyclo[5.2.1.02,6]décane et ses mélanges isomères (TCD-amine), le 1,6-hexaméthylènediamine, le diéthylènetriamine (DETA), le triéthylènetétramine (TETA), le tétraéthylènepentamine (TEPA), le pentaéthylènehexamine (PEHA), le 1,3-benzènediméthanamine (mXDA), le 1,4-benzènediméthanamine (pXDA) et le N,N'-diméthyl-1,3-benzènediméthaneamine, et des mélanges de deux ou plus de ceux-ci.

7. Composition de durcisseur selon la revendication 6, **caractérisée en ce que** l'amine réactive vis-à-vis des groupes époxy est choisie parmi le 3-aminométhyl-3,5,5-triméthylcyclohexane (IPDA), le 2-méthyl-1,5-pentanediamine (DYTEK A), le 1,3-benzènediméthaneamine (mXDA) et le 1,3-bis(aminométhyl)-cyclohexane (1,3-BAC) et leurs mélanges.

8. Composition de durcisseur selon l'une des revendications précédentes, **caractérisée en ce que** le sel (S) est choisi dans le groupe constitué par le nitrate ($NO_3^-$), l'iodure ($I^-$), le triflate ($CF_3SO_3^-$) et leurs mélanges.

9. Composition de durcisseur selon l'une des revendications précédentes, **caractérisée en ce que** le sel (S) est contenu dans la composition de durcisseur en une proportion de 0,1 à 15 % en poids, par rapport au poids total de la composition de durcisseur.

10. Matière de résine époxy contenant au moins une résine époxy durcissable et une composition de durcisseur selon l'une des revendications précédentes.

11. Matière de résine époxy selon la revendication 10, **caractérisée en ce que** la matière de résine époxy est une matière de résine époxy à plusieurs composants.

12. Système de résine époxy à plusieurs composants comprenant un composant de résine époxy (A) et un composant durcisseur, dans lequel le composant de résine époxy (A) contient une résine époxy durcissable, et le composant durcisseur comprend un produit d'addition benzoxazine-amine et une amine réactive vis-à-vis des groupes époxy, le produit d'addition benzoxazine-amine étant choisi dans le groupe constitué par des substances selon la formule **Ia,** des substances selon la formule **Ib** ou leurs mélanges, comportant les structures suivantes :

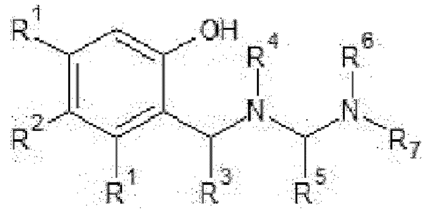

Ia,

et

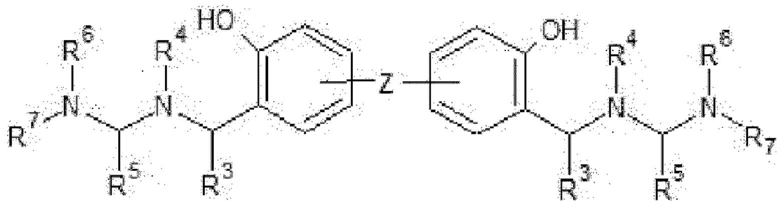

Ib,

$R^1$, $R^2$, $R^3$, $R^4$ et $R^5$ étant respectivement indépendamment choisis parmi H, un radical alkyle, cycloalkyle, hétérocycloalkyle, aryle, hétéroaryle, arylalkyle, hétéroalkyle, alcoxy, hydroxyle, hydroxyalkyle, carboxyle, halo, haloalkyle, amino, aminoalkyle, alkylcarbonyloxy, arylcarbonyloxy, alcoxycarbonyle, alkylcarbonyle, alkylsulfonylamino, aminosulfonyle, acide sulfonique ou alkylsulfonyle, et également parmi des combinaisons de deux ou plus desdits radicaux, les radicaux pouvant être respectivement non substitués ou éventuellement substitués ;

$R^6$ et $R^7$ représentant respectivement indépendamment H ou un radical amino, diamino ou polyamino et étant

choisis dans le groupe constitué par des radicaux amine aliphatiques, alicycliques, aromatiques ou araliphatiques, et également parmi des combinaisons de deux ou plus desdits radicaux, les radicaux pouvant être respectivement non substitués ou éventuellement substitués ;
Z étant choisi parmi une liaison directe, -C(O)-, -S-, -O-, -S(O)-, $-S(O)_2-$,$-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(\text{aryle})-[C(R^{10})(R^{11})]_n-$, $-[C(R^8)(R^9)]_m-C(O)-[(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, un hétérocycle divalent et $-[C(R^8)(R^9)]_m$-arylène-$[C(R^{10})(R^{11})]_n-$, m et n représentant respectivement indépendamment l'un de l'autre 0 à 10, de préférence 0 à 5, $R^8$, $R^9$, $R^{10}$ et $R^{11}$ possédant respectivement indépendamment la même représentation que les radicaux $R^1$ à $R^5$ ; et l'amine réactive vis-à-vis des groupes époxy étant choisie dans le groupe constitué par les amines aliphatiques, alicycliques, aromatiques et araliphatiques, et présentant en moyenne au moins deux atomes d'hydrogène réactifs liés à un atome d'azote par molécule, **caractérisé en ce qu'**un sel (S) est choisi parmi les sels d'acide nitrique, les sels d'acide nitreux, les sels d'halogènes, les sels d'acide trifluorométhanesulfonique et leurs combinaisons dans le composant de résine époxy (A) et/ou dans le composant durcisseur.

**13.** Système de résine époxy à plusieurs composants selon la revendication 12, **caractérisé en ce que** le sel (S) est contenu dans le composant durcisseur.

**14.** Procédé permettant la fixation chimique d'éléments de construction dans des trous de forage, dans lequel une matière de résine époxy selon la revendication 10 ou 11 ou un système de résine époxy à plusieurs composants selon la revendication 12 ou 13 est utilisé pour la fixation chimique.

**15.** Utilisation d'au moins un sel (S) choisi dans le groupe constitué par les sels d'acide nitrique, les sels d'acide nitreux, les sels d'halogènes, les sels d'acide trifluorométhanesulfonique et leurs combinaisons en tant qu'accélérateur dans une matière de résine époxy permettant la fixation chimique, la matière de résine époxy comprenant un produit d'addition benzoxazine-amine et une amine réactive vis-à-vis des groupes époxy, le produit d'addition benzoxazine-amine étant choisi dans le groupe constitué par des substances selon la formule Ia, des substances selon la formule Ib ou leurs mélanges, comportant les structures suivantes :

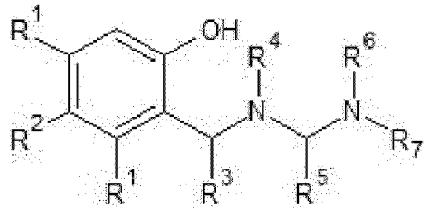

Ia,

et

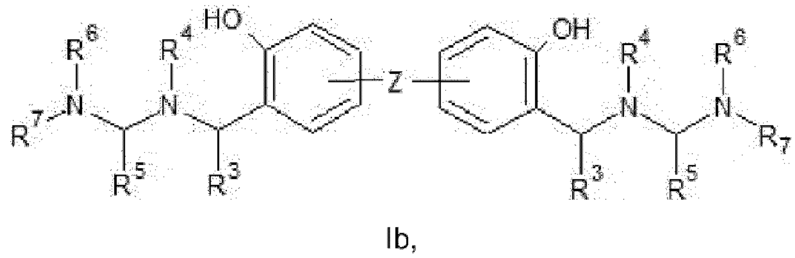

Ib,

$R^1$, $R^2$, $R^3$, $R^4$ et $R^5$ étant respectivement indépendamment choisis parmi H, un radical alkyle, cycloalkyle, hétérocycloalkyle, aryle, hétéroaryle, arylalkyle, hétéroalkyle, alcoxy, hydroxyle, hydroxyalkyle, carboxyle, halo, haloalkyle, amino, aminoalkyle, alkylcarbonyloxy, arylcarbonyloxy, alcoxycarbonyle, alkylcarbonyle, alkylsulfonylamino, aminosulfonyle, acide sulfonique ou alkylsulfonyle, et également parmi des combinaisons de deux ou plus desdits radicaux, les radicaux pouvant être respectivement non substitués ou éventuellement substitués ;

$R^6$ et $R^7$ représentant respectivement indépendamment H ou un radical amino, diamino ou polyamino et étant

choisis dans le groupe constitué par des radicaux amine aliphatiques, alicycliques, aromatiques ou araliphatiques, et également parmi des combinaisons de deux ou plus desdits radicaux, les radicaux pouvant être respectivement non substitués ou éventuellement substitués ;
Z étant choisi parmi une liaison directe, -C(O)-, -S-, -O-, -S(O)-, $-S(O)_2-$,$-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(\text{aryle})-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, un hétérocycle divalent et $-[C(R^8)(R^9)]_m-\text{arylène}-[C(R^{10})(R^{11})]_n-$, m et n représentant respectivement indépendamment l'un de l'autre 0 à 10, de préférence 0 à 5, $R^8$, $R^9$, $R^{10}$ et $R^{11}$ possédant respectivement indépendamment la même représentation que les radicaux $R^1$ à $R^5$, et l'amine réactive vis-à-vis des groupes époxy étant choisie dans le groupe constitué par les amines aliphatiques, alicycliques, aromatiques et araliphatiques, et présentant en moyenne au moins deux atomes d'hydrogène réactifs liés à un atome d'azote par molécule.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0149989 A2
- WO 2013063236 A1
- WO 2013048851 A1
- EP 2826798 A1
- EP 3000792 A1


### In der Beschreibung aufgeführte Nicht-Patentliteratur


- **A. D. MCNAUGHT ; A. WILKINSON.** IUPAC Compendium of Chemical Terminology. Blackwell Scientific Publications, 1997
- **MICHAEL DORNBUSCH ; ULRICH CHRIST ; ROB RASING.** Epoxidharze. Vincentz Network GmbH & Co KG, 2015
- *CHEMICAL ABSTRACTS,* 154505-70-1
- *CHEMICAL ABSTRACTS,* 214476-06-9
- *CHEMICAL ABSTRACTS,* 56-81-5